# EUROPEAN PATENT SPECIFICATION

(11) **EP 4 413 654 B1**
(45) Date of publication and mention of the grant of the patent: **14.10.2026**
(21) Application number: 21959711.9
(22) Date of filing: 09.10.2021
(51) Int. Cl.: H02N 2/02, H02N 2/04

(54) **PIEZOELECTRIC DRIVE DEVICE AND PIEZOELECTRIC DRIVE SYSTEM HAVING SAME**
PIEZOELEKTRISCHE ANTRIEBSVORRICHTUNG UND PIEZOELEKTRISCHES ANTRIEBSSYSTEM DAMIT
DISPOSITIF D'ENTRAÎNEMENT PIÉZOÉLECTRIQUE ET SYSTÈME D'ENTRAÎNEMENT PIÉZOÉLECTRIQUE PRÉSENTANT CE DERNIER

(43) Date of publication of application: 14.08.2024
(73) Proprietor: Beijing Xiaomi Mobile Software Co., Ltd., Beijing 100085 (CN)
(72) Inventor: UNO, Masaru, Tokyo 141-0031 (JP)
(74) Representative: dompatent
(86) International application number: PCT/CN2021/122791
(87) International publication number: WO 2023/056619

(56) References cited:
- WO-A1-2016/051146
- WO-A1-2017/158017
- CN-U- 211 352 077
- JP-A- 2010 057 225
- JP-A- 2019 092 280
- US-A1- 2017 093 304
- US-A1- 2017 207 725
- US-A1- 2019 229 647

## Description

### FIELD

The present invention relates to a technical field of piezoelectric drive, and more particularly to a piezoelectric drive device and a piezoelectric drive system having the same.

### BACKGROUND

In the related art, a piezoelectric drive system generally has two types. One is USM type, and the other one is SIDM type. The piezoelectric drive system of the USM type is complicated and expensive, and the generated stroke is very small. On the other hand, the piezoelectric drive system of the SIDM type needs a weight and a shaft, and thus has a complicated structure. Further, the control method of the piezoelectric drive system of the SIDM type is very difficult, as a deformation speed of a piezoelectric element needs to be controlled accurately.

WO2016051146A1 relates to a positioning device for causing movement relative to a guide. The positioning device includes at least two motion members, and each member is actuatable between a retracted state and an expanded state. Upon actuation between the retracted state and the expanded state a motion member is movable into or able to increase gripping engagement with the guide and simultaneously cause relative movement between the device and the guide.

US2019229647A1 relates to a piezoelectric inertial drive stage including a piezoelectric inertial driver, a slider and a holder. The driver includes a mounting portion for the mounting on the holder, a friction portion coupling to the slider, a flexure portion between the mounting portion and friction portion, a piezoelectric element with a first end bonded to the mounting portion and a second end bonded to a movement portion, the movement portion transferring the motion of the piezoelectric element to the friction portion to drive the slider.

WO2017158017A1 relates to a piezoelectric stepper drive, including at least one piezoelectric drive apparatus (2) with at least two drive sections which can be driven independently of one another and which are each acted on by at least two piezoelectric actuators, and a rotor (3) is advanced by at least one of the drive sections when control voltages are applied to the actuators, wherein the drive apparatus (2) is designed approximately in the form of a triangle which has the drive sections arranged at its corners, the drive apparatus (2) is designed with mirror-image symmetry in relation to a plane of symmetry which includes the advancing direction of the rotor (3) and runs between the drive sections of the same drive apparatus, and at least one of the drive sections is prestressed in relation to the rotor (3) in the absence of control voltages applied to the actuators. In order to allow more precise control of the advance of the rotor (3), it is provided according to the invention that at least one of the drive sections is prestressed in relation to the rotor (3) in the absence of control voltages applied to the actuators in such a way that said one drive section blocks the advance of the rotor (3), wherein each of the drive sections is mounted such that it has an individual spring action in relation to a base (201) of the triangle.

### SUMMARY

As such, it is necessary to propose a piezoelectric drive device and a piezoelectric drive system so as to solve at least one of the above technical problems in the related art.

The present invention is defined in the independent device claim 1, and the preferable features according to the present invention are defined in the dependent claims. Any embodiment in the present disclosure that does not fall within the scope of the present invention should be regarded as an example for understanding the present invention.

In the present invention, the piezoelectric drive device further includes: a retaining member arranged in the cavity, and having a first end abutting against the closed end of the case and a second end opposite to the first end; and a shaft arranged in the cavity and fitted with the second end of the retaining member, the shaft being configured to move under the action of the retaining member. The first end of the holder is fixed to the shaft and abuts against the second end of the retaining member.

In some embodiments, the case at least includes two opposite side walls, each side wall has an opening, the openings of the two opposite side walls of the case are aligned with each other, two ends of the shaft are received in the openings of the two opposite side walls of the case, respectively, and the shaft is configured to move within the openings under the action of the retaining member.

In some embodiments, end faces of the two ends of the shaft are flush with outer surfaces of the two opposite side walls of the case, respectively.

In some embodiments, each opening has two arc ends matching with a shape of each end of the shaft and configured to be fitted with each end of the shaft.

In some embodiments, the second end of the retaining member has a first groove, and the shaft is at least partially fitted in the first groove.

In some embodiments, the first end of the holder has a second groove, and the shaft is at least partially fitted in and is fixed in the second groove.

In some embodiments, the first groove, the shaft and the second groove are aligned with one another in a direction from the closed end to the open end of the case, each of the first groove and the second groove has a cross section of an arc shape matching with the shaft, the first groove and the second groove enclose a periphery of the shaft.

In some embodiments, the bottom of the recess includes a first section, a second section and a third section, the first section is connected to the first side wall, the second section is connected to the second side wall, the third section is connected between the first section and the second section, the first section is fitted with the first piezoelectric element, and the second section is fitted with the second piezoelectric element, the first piezoelectric element matches with the first side wall and the first section of the recess in shape and orientation, respectively, and the second piezoelectric element matches with the second side wall and the second section of the recess in shape and orientation, respectively.

In some embodiments, each of the first piezoelectric element and the second piezoelectric element has a cuboid shape, the third section of the recess is parallel to an end face of the first end of the holder, the direction perpendicular to the first side wall of the recess is orthogonal to a direction perpendicular to the first section of the recess, and the direction perpendicular to the second side wall of the recess is orthogonal to a direction perpendicular to the second section of the recess.

In some embodiments, a first transition part is provided at a joint of the first side wall and the first section of the recess, and a second transition part is provided at a joint of the second side wall and the second section of the recess.

In some embodiments, the direction perpendicular to the first side wall of the recess has a first included angle with a plane where an end face of the first end of the holder is, and the direction perpendicular to the second side wall of the recess has a second included angle with the plane where the end face of the first end of the holder is.

In some embodiments, the first included angle ranges from 24 degrees to 25 degrees, and the second included angle ranges from 24 degrees to 26 degrees.

In some embodiments, the first piezoelectric element is symmetrical with the second piezoelectric element, and the first included angle is equal to the second included angle.

In some embodiments, each of the first actuating member and the second actuating member has a first end adjacent to the holder and a second end away from the holder, the first end of the first actuating member is spaced apart from the first end of the second actuating member, the second end of the first actuating member protrudes beyond the first piezoelectric element in a direction facing away from the holder, and the second end of the second actuating member protrudes beyond the second piezoelectric element in the direction facing away from the holder.

In some embodiments, the piezoelectric drive device further includes a flexible printed circuit board electrically connected to the first piezoelectric element and the second piezoelectric element, and configured to power on or off the first piezoelectric element and the second piezoelectric element. The flexible printed circuit board is arranged in the cavity of the case and clamped between a side wall of the case and the holder.

In some embodiments, the flexible printed circuit board has a first end received within the cavity of the case and a second end protrudes out of the cavity of the case, the first end of the flexible printed circuit board is flush with the first end of the holder, and has a first notch fitted with the shaft, the second end of the flexible printed circuit board includes two legs spaced apart from each other to expose at least a part of the recess.

In some embodiments, the piezoelectric drive device further includes a pad arranged in the cavity of the case and clamped between the flexible printed circuit board and the side wall of the case.

In some embodiments, the pad has an end flush with the first end of the holder, and the end of the pad has a second notch fitted with the shaft.

Embodiments of a second aspect of the present invention further provide a piezoelectric drive system, including: a piezoelectric drive device according to any one of the above embodiments; and a movable member arranged under the piezoelectric drive device, and configured to be fitted with the first actuating member or the second actuating member of the piezoelectric drive device. The retaining member is configured to retain the first actuating member or the second actuating member against the movable member, and the movable member is configured to move under the drive of the first actuating member or the second actuating member.

In the piezoelectric drive device and the piezoelectric drive system according to the embodiments of the present invention, when the first or second piezoelectric element is powered on, the first or second piezoelectric element will expand in the direction perpendicular to the first or second side wall of the recess, so as to drive the first or second actuating part to move in the same direction, and thus the first or second actuating part can be fitted with the movable member to drive the movable member to move in a desired direction. Further, when the first or second piezoelectric element is powered off, the first or second piezoelectric element will shrink in the direction perpendicular to the first or second side wall of the recess, and hence the first or second actuating part will also restore to its initial position without influence on the movable member. As repeated in this manner, the movable member can move continuously in the desired direction.

Consequently, the piezoelectric drive device and the piezoelectric drive system according to the embodiments of the present invention have advantages of a simple structure, a convenient control, a precise drive stroke, a strong drive force and a high energy conversion efficiency.

Other advantages, objectives and features of the rotary blade structure for the cylindrical cabinet indoor unit described in the present invention will be partially reflected by the following descriptions, and also will be partially understood by those skilled in the related art according to research and practice of the present invention.

### BRIEF DESCRIPTION OF THE DRAWINGS

The above and/or additional aspects and advantages of the present invention will become apparent and easy to understand from descriptions of embodiments in connection with following drawings.
Fig. 1 is a schematic view of a piezoelectric drive device according to an embodiment of the present invention.
Fig. 2 is an exploded view of a piezoelectric drive device according to an embodiment of the present invention.
Fig. 3 is a front view of a piezoelectric drive device according to an embodiment of the present invention.
Fig. 4 is a sectional view of a piezoelectric drive device according to an embodiment of the present invention.
Fig. 5 is a schematic view of a holder of a piezoelectric drive device according to an embodiment of the present invention.
Fig. 6 is a schematic view of a piezoelectric drive device according to an embodiment of the present invention.
Fig. 7 is a bottom view of a piezoelectric drive device according to an embodiment of the present invention.
Fig. 8 is a schematic view of a flexible printed circuit board of a piezoelectric drive device according to an embodiment of the present invention.
Fig. 9 is a schematic view of a piezoelectric drive system according to an embodiment of the present invention.

### DETAILED DESCRIPTION

Embodiments of the present invention are described in detail below, and examples of the embodiments are shown in the drawings. Same or similar reference numerals from beginning to end indicate same or similar elements or elements having same or similar functions. The embodiments described below with reference to the attached drawings are exemplary and are only intended to interpret the present invention and cannot be understood as a limitation to the present invention.

In the description of the present invention, it is should be understood that the orientation or position relationships indicated by the terms "central", "up", "down", "front", "rear", "vertical", "horizontal", "top", "bottom", "inner", "outer", "axial", "radial" and "circumferential" are based on the orientation or position relationships shown in the attached drawings, only for the convenience of describing the present invention and simplifying the description, instead of indicating or implying that the device or element referred to must have a specific orientation and be constructed and operated in a specific orientation, and thus cannot be understood as a limitation of the present invention.

A piezoelectric drive device 100 and a piezoelectric drive system 1000 according to embodiments of the present invention will be described with reference to the drawings. The piezoelectric drive device 100 can be used in the piezoelectric drive system 1000.

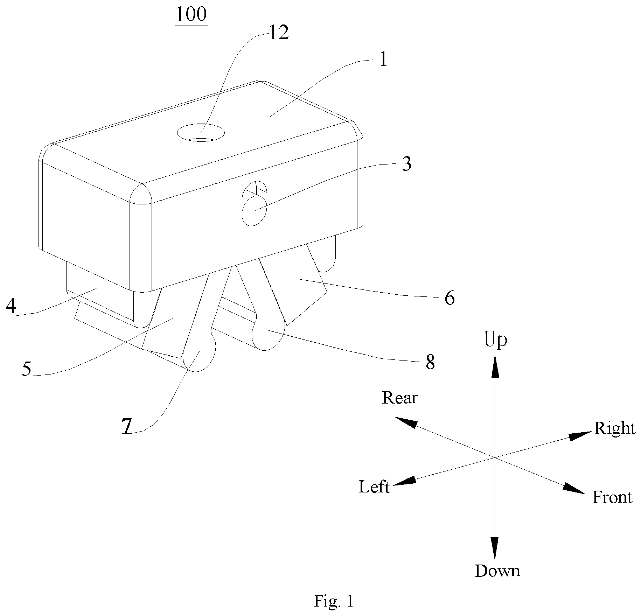

As shown in Figs. 1-4, the piezoelectric drive device 100 includes a case 1, a holder 4, a first piezoelectric element 5, a second piezoelectric element 6, a first actuating member 7 and a second actuating member 8. The case 1 defines a cavity 13 therein, and the case 1 has a closed end and an open end. The holder 4 is arranged in the cavity 13, and has a first end coupled to the closed end of the case 1, and a second end facing towards the open end of the case 1, and the second end of the holder 4 has a recess in its end face. The recess includes a first side wall 41, a second side wall 42 and a bottom 43 connected between the first side wall 41 and the second side wall 42. The first side wall 41 and the second side wall 42 obliquely extend outwards from the bottom 43. The first piezoelectric element 5 and the second piezoelectric element 6 are arranged on the first side wall 41 and the second side wall 42 of the recess, respectively. The first piezoelectric element 5 is configured to expand or shrink in a direction perpendicular to the first side wall 41 of the recess when powered on or off, and the second piezoelectric element 6 is configured to expand or shrink in a direction perpendicular to the second side wall 42 of the recess when powered on or off. The first actuating member 7 and the second actuating member 8 are fixed to the first piezoelectric element 5 and the second piezoelectric element 6, respectively, and face towards each other.

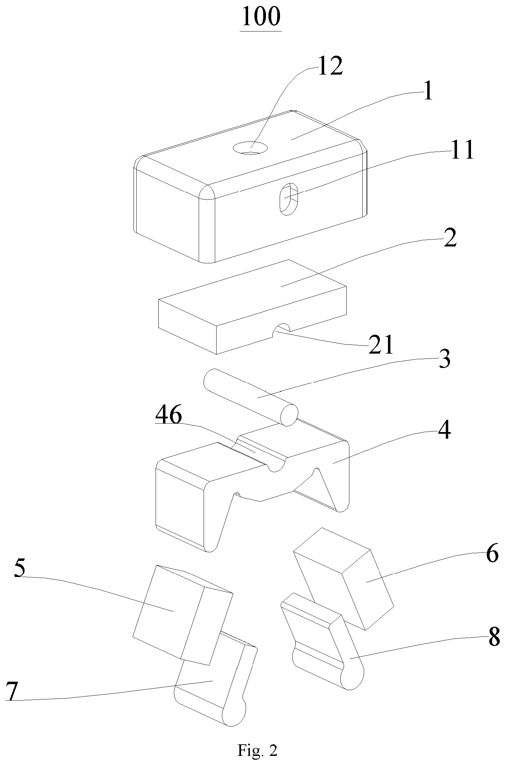

In some embodiments of the present invention, as shown in Figs. 1 and 2, an upper end of the case 1 is closed, and a lower end of the case 1 is open, so that other parts can be mounted into the cavity 13 of the case 1 through the open lower end of the case 1. An upper end of the holder 4 is coupled to the upper end of the case 1, and a lower end of the holder 4 faces towards the lower end of the case 1 and has the recess in its end face. The first side wall 41 is arranged on a left side of the bottom 43, and the second side wall 42 is arranged on a right side of the bottom 43. The first side wall 41 and the second side wall 42 obliquely extend outwards from the bottom 43. That is, the first side wall 41 extends leftwards and downwards from the bottom 43, and the second side wall 42 extends rightwards and downwards from the bottom 43. Further, a left end of the first piezoelectric element 5 is adhered to the first side wall 41 of the recess by hard glue, and a right end of the second piezoelectric element 6 is adhered to the second side wall 42 of the recess by hard glue. Thus, the first piezoelectric element 5 is configured to expand in a rightward and downward direction or shrink in a leftward and upward direction when powered on or off, and the second piezoelectric element 6 is configured to expand in a leftward and downward direction or shrink in a rightward and upward direction when powered on or off. A left end of the first actuating member 7 is adhered to a right end of the first piezoelectric element 5 by hard glue, and a right end of the second actuating member 8 is adhered to a left end of the second piezoelectric element 6 by hard glue, and a right end of the first actuating member 7 and a left end of the second actuating member 8 face towards each other, so that the right end of the first actuating member 7 faces in the rightward and downward direction, and the left end of the second actuating member 8 faces in the leftward and downward direction.

It should be noted that "up", "down", "front", "rear", "left" and "right" are used herein to indicate the orientation in the drawings and intended for easy understanding of the present invention, but should not be interpreted as a limitation to the present invention.

In the piezoelectric drive device according to the embodiments of the present invention, when the first or second piezoelectric element 5 or 6 is powered on, the first or second piezoelectric element 5 or 6 will expand in the direction perpendicular to the first or second side wall 41 or 42 of the recess, so as to drive the first or second actuating part 7 or 8 to move in the same direction, and thus the first or second actuating part 7 or 8 can be fitted with a movable member 200 of the piezoelectric drive system 1000 to drive the movable member 200 to move in a desired direction. Further, when the first or second piezoelectric element 5 or 6 is powered off, the first or second piezoelectric element 5 or 6 will shrink in the direction perpendicular to the first or second side wall 41 or 42 of the recess, and hence the first or second actuating part 7 or 8 will also restore to its initial position without influence on the movable member 200. As repeated in this manner, the movable member 200 can move continuously in the desired direction.

Consequently, the piezoelectric drive device 100 according to the embodiments of the present invention has advantages of a simple structure, a precise drive stroke, a strong drive force and a high energy conversion efficiency.

Further, since the first piezoelectric element 5 is adhered to the first side wall 41 of the recess and the first actuating member 7 by hard glue, and the second piezoelectric element 6 is adhered to the second side wall 42 of the recess and the second actuating member 8 by hard glue, the connection between the first piezoelectric element 5 and the first side wall 41 of the recess, the connection between the first piezoelectric element 5 and the first actuating member 7, the connection between the second piezoelectric element 6 and the second side wall 42 of the recess, and the connection between the second piezoelectric element 6 and the second actuating member 8 are firm and stable, and the hard glue tends not to absorb the expansion of the first piezoelectric element 5 and the second piezoelectric element 6, so that the first piezoelectric element 5 and the second piezoelectric element 6 can expand to drive the first actuating member 7 and the second actuating member 8 to move reliably and efficiently.

In addition, since the first piezoelectric element 5 is adhered to the first side wall 41 of the recess by hard glue and the second piezoelectric element 6 is adhered to the second side wall 42 of the recess by hard glue, when the first piezoelectric element 5 is powered on to expand along the direction perpendicular to the first side wall 41 of the recess, the first side wall 41 of the recess will restrict the movement of the left end of the first piezoelectric element 5, so that the right end of the first piezoelectric element 5 will expand along the direction perpendicular to the first side wall 41 of the recess, and thus the first actuating member 7 is driven to move accordingly. Similarly, when the second piezoelectric element 6 is powered on to expand along the direction perpendicular to the second side wall 42 of the recess, the second side wall 42 of the recess will restrict the movement of the right end of the second piezoelectric element 6, so that the left end of the second piezoelectric element 6 will expand along the direction perpendicular to the second side wall 42 of the recess, and thus the second actuating member 8 is driven to move accordingly.

In the present invention, the piezoelectric drive device 100 further includes a retaining member 2 and a shaft 3. The retaining member 2 is arranged in the cavity 13, and has a first end abutting against the closed end of the case 1 and a second end opposite to the first end. The shaft 3 is arranged in the cavity 13 and fitted with the second end of the retaining member 2, and the shaft 3 is configured to move under the action of the retaining member 2. The first end of the holder 4 is fixed to the shaft 3 and abuts against the second end of the retaining member 2.

Specifically, as shown in Figs. 1 and 2, an upper end of the retaining member 2 abuts against the closed upper end of the case 1, the shaft 3 is fitted with a lower end of the retaining member 2, and the shaft 3 is configured to move up and down under the action of the retaining member 2. The upper end of the holder 4 is adhered to the shaft 3 by hard glue and abuts against the lower end of the retaining member 2.

In some embodiments of the present invention, the case 1 at least includes two opposite side walls, each side wall has an opening 11, the openings 11 of the two opposite side walls of the case 1 are aligned with each other, two ends of the shaft 3 are received in the openings 11 of the two opposite side walls of the case 1, respectively, and the shaft 3 is configured to move within the openings 11 under the action of the retaining member 2.

As shown in Figs. 1-3, front and rear side walls of the case 1 have the opening 11, the opening 11 extends vertically, and the openings 11 of the front and rear side walls of the case 1 are aligned with each other, so that the shaft 3 can be inserted into the case 1 through the openings 11 after the retaining member 2 is placed into the cavity 13 of the case 1. When mounted in place, front and rear ends of the shaft 3 are fitted and received in the openings 11, respectively. Thus, the shaft 3 can move within the openings 11 under the action of the retaining member 2, when a position of the movable member 200 changes vertically.

For example, the retaining member 2 may be made of elastic materials, such as rubber, and should be mounted in the cavity 13 of the case 1 in a compressed state, so that the retaining member 2 can apply an elastic force of about 200mN to the shaft 3 when the shaft 3 is inserted into the case 1 through the openings 11 and fitted with the retaining member 2. Further, since the holder 4 is fixed to the shaft 3 and the upper end of the holder 4 abuts against the lower end of the retaining member 2, the holder 4 is also subject to the elastic force of the retaining member 2. In this way, when the movable member 200 tends to move downwards, the retaining member 2 will push the shaft 3 and the holder 4 to move downwards along the openings 11, and hence the first and second piezoelectric elements 5, 6 and the first and second actuating member 7, 8 will also move downwards, so that the first and second actuating member 7, 8 can maintain a contact with and be fitted with the movable member 200.

Similarly, since the retaining member 2 has elasticity and can be further compressed, when the movable member 200 moves upwards, the first and second piezoelectric elements 5, 6 and the first and second actuating member 7, 8 will be driven by the movable member 200 to move upwards, and hence the shaft 3 and the holder 4 will also move upwards along the openings 11. In this process, the first and second actuating member 7, 8 maintain a contact with and are fitted with the movable member 200.

Thus, the piezoelectric drive device 100 according to the embodiments of the present invention may adapt to various vertical position changes of the movable member 200, so as to be stably fitted with the movable member 200, thus driving the movable member 200 to move smoothly and reliably.

In addition, the opening 11 may be centered horizontally, that is, positioned in a horizontal center of the front or rear side wall of the case 1, so that the shaft 3 passing through the opening 11 and the holder 4 fixed to be shaft 3 can also be centered horizontally.

Further, end faces of the two ends of the shaft 3 are flush with outer surfaces of the two opposite side walls of the case 1, respectively. Specifically, as shown in Figs. 1 and 2, the end faces of the front and rear ends of the shaft 3 are flush with outer surfaces of the front and rear side walls of the case 1, respectively. Thus, the case 1 has a flat surface when the shaft 3 is mounted in the case 1, which provides a neat appearance and avoids an interference with other external parts.

In some embodiments of the present invention, each opening 11 has two arc ends matching with a shape of the end of the shaft 3 and configured to be fitted with the end of the shaft 3. For example, as shown in Figs. 1 and 2, an upper end and a lower end of the opening 11 each have an arc shape that matches with the shape of the front or rear end of the shaft 3, so that the front or rear end of the shaft 3 can be fitted in the upper end or the lower end of the opening 11, when the shaft 3 moves to the upper end or the lower end of the opening 11. Thus, the shaft 3 can be moved smoothly and positioned stably in place.

Moreover, the second end of the retaining member 2 has a first groove 21 parallel to the shaft 3, and the shaft 3 is at least partially fitted in the first groove 21. For example, as shown in Figs. 1 and 2, the first groove 21 is formed in the lower end of the retaining member 2, and a part of the shaft 3 is fitted in the first groove 21.

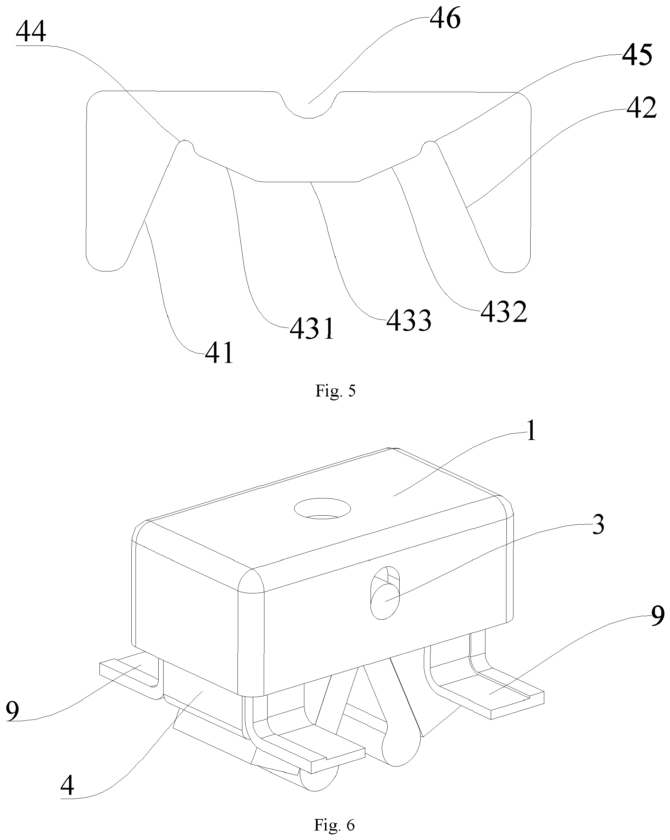

Further, the first end of the holder 4 has a second groove 46 parallel to the shaft 3, and the shaft 3 is at least partially fitted in and is fixed in the second groove 46. For example, as shown in Figs. 1-2 in combination with Fig. 5, the second groove 46 is formed in the upper end of the holder 4, and another part of the shaft 3 is fitted and fixed in the second groove 46.

The first groove 21, the shaft 3 and the second groove 46 are aligned with one another in a direction from the closed end to the open end of the case 1, each of the first groove 21 and the second groove 46 has a cross section of an arc shape matching with the shaft 3, and the first groove 21 and the second groove 46 enclose a periphery of the shaft 3.

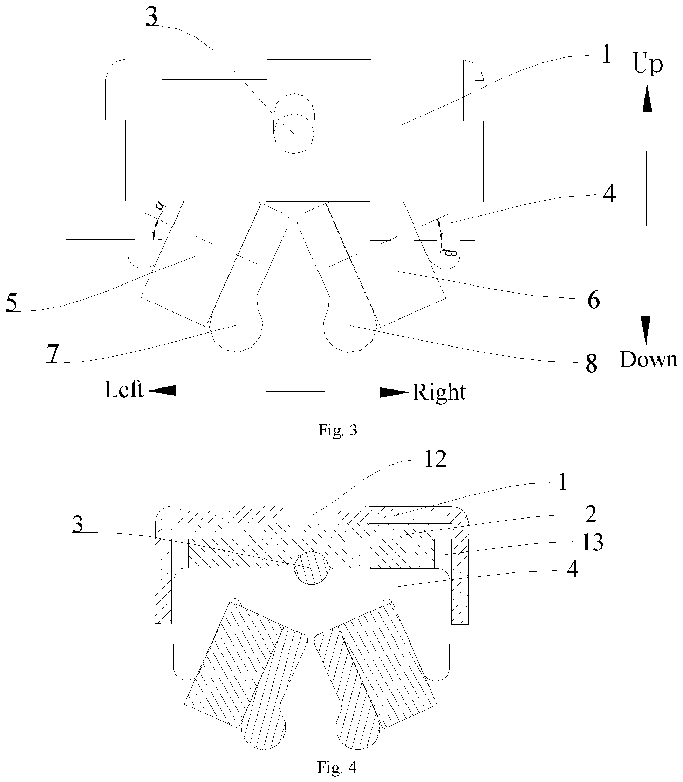

Specifically, as shown in Figs. 1-2 in combination with Figs. 4-5, the first groove 21, the shaft 3 and the second groove 46 are aligned with one another vertically, the first groove 21 and the second groove 46 each have an arc cross section whose shape matches with the shaft 3, and thus the first groove 21 and the second groove 46 surround the periphery of the shaft 3 as a whole.

In this way, the shaft 3 can be clamped between the retaining member 2 and the holder 4 stably, and the retaining member 2 can have a relatively large contact area with the holder 4, so that the retaining member 2 can drive the shaft 3 and the holder 4 to move smoothly.

In some other embodiments of the present invention, the openings 11 may not be provided in the front and rear side walls of the case 1. Instead, slots may be formed in inner surfaces of the front and rear side walls of the case 1, respectively, and the slot extends to the lower end of the case 1, so that the shaft 3 can be mounted into the case 1 through the slot, fitted in the slot and even moved within the slot. Thus, the retaining member 2 can drive the shaft 3 and the holder 4 to move up and down within the slots, just as described above.

In some other embodiments of the present invention, the shaft 3 and the opening 11 may not be provided, and only the retaining member 2 is clamped between the upper end of the case 1 and the holder 4. In this case, the retaining member 2 may be a block of rubber or a spring in a compressed state, so that it can drive the holder 4 to move up and down, just as described above.

In some other embodiments of the present invention, the retaining member 2, the shaft 3 and the opening 11 may not be provided, the holder 4 directly abuts against the upper end of the case 1 and the case 1 itself has certain elasticity. For example, the upper end of the case 1 is elastically deformed to always apply a downward force to the holder 4, so that the holder 4 can be driven to move up and down, just as described above.

In some embodiments of the present invention, the bottom 43 of the recess includes a first section 431, a second section 432 and a third section 433, the first section 431 is connected to the first side wall 41, the second section 432 is connected to the second side wall 42, and the third section 433 is connected between the first section 431 and the second section 432. For example, as shown in Figs. 2 and 5, the first section 431, the third section 433 and the second section 432 are connected in sequence, the first section 431 is arranged on a left side of the third section 433, and the second section 432 is arranged on a right side of the third section 433.

Further, the first section 431 is fitted with the first piezoelectric element 5, and the second section 432 is fitted with the second piezoelectric element 6. That is, the first piezoelectric element 5 is in a contact with the first section 431, but is not fixed to the first section 431, and the second piezoelectric element 6 is in a contact with the second section 432, but is not fixed to the second section 432. In this way, when the first or second piezoelectric element 5 or 6 expands or shrinks, the first or second piezoelectric element 5 or 6 will not interfere with the first section 431 or the second section 432, so that the first or second piezoelectric element 5 or 6 can expand or shrink smoothly.

Furthermore, the first piezoelectric element 5 matches with the first side wall 41 and the first section 431 of the recess in shape and orientation, respectively, and the second piezoelectric element 6 matches with the second side wall 42 and the second section 432 of the recess in shape and orientation, respectively. For example, the first piezoelectric element 5 has a flat surface parallel with a flat surface of the first side wall 41 and another flat surface parallel with a flat surface of the first section 431, and the second piezoelectric element 6 has a flat surface parallel with a flat surface of the second side wall 42 and another flat surface parallel with a flat surface of the second section 432.

In this way, the first piezoelectric element 5 can have a stable connection with the first side wall 41 and also have a smooth fit with the first section 431, and the second piezoelectric element 6 can have a stable connection with the second side wall 42 and also have a smooth fit with the second section 432. Thus, the first piezoelectric element 5 can expand or shrink stably and smoothly in the direction perpendicular to the first side wall 41, and the second piezoelectric element 6 can expand or shrink stably and smoothly in the direction perpendicular to the second side wall 42.

For example, as shown in Figs. 1-4, each of the first piezoelectric element 5 and the second piezoelectric element 6 has a cuboid shape, the third section 433 of the recess is parallel to an end face of the first end (i.e. the upper end) of the holder 4, the direction perpendicular to the first side wall 41 of the recess is orthogonal to a direction perpendicular to the first section 431 of the recess, and the direction perpendicular to the second side wall 42 of the recess is orthogonal to a direction perpendicular to the second section 432 of the recess.

That is, the first piezoelectric element 5 has two orthogonal surfaces which are fixed to the first side wall 41 and fitted with the first section 431, respectively, and the second piezoelectric element 6 has two orthogonal surfaces which are fixed to the second side wall 42 and fitted with the second section 432, respectively.

In this way, the first piezoelectric element 5 can expand or shrink stably and smoothly in the direction perpendicular to the first side wall 41 under the guide of the first section 431, and the second piezoelectric element 6 can expand or shrink stably and smoothly in the direction perpendicular to the second side wall 42 under the guide of the second section 432.

In some embodiments of the present invention, a first transition part 44 is provided at a joint of the first side wall 41 and the first section 431 of the recess, and a second transition part 45 is provided at a joint of the second side wall 42 and the second section 432 of the recess. For example, each of the first transition part 44 and the second transition part 45 may be a groove having an arc cross section, which avoids a local stress concentration. It should be noted that the groove extends in a direction perpendicular to a paper surface of Fig. 5, i.e. a front-rear direction in Figs. 1 and 2.

Moreover, the holder 4 may be solid or hollow, which is not limited herein, as long as the holder 4 has the above structures and provides a desired rigidity. For example, in some embodiments of the present invention, the holder 4 is hollow, that is, the holder 4 is formed by bending a single sheet and connecting its head to its tail, or by connecting multiple sheets end to end.

In some embodiments of the present invention, as shown in Fig. 3, the direction perpendicular to the first side wall 41 of the recess has a first included angle α with a plane where an end face of the first end (i.e. the upper end) of the holder 4 is, and the direction perpendicular to the second side wall 42 of the recess has a second included angle β with the plane where the end face of the first end (i.e. the upper end) of the holder 4 is.

Further, the first included angle α ranges from 24 degrees to 25 degrees, and the second included angle β ranges from 24 degrees to 26 degrees.

For example, the first included angle α may be 24 degrees, 24.5 degrees, 25 degrees, 25.5 degrees or 26 degrees, and the second included angle β may be 24 degrees, 24.5 degrees, 25 degrees, 25.5 degrees or 26 degrees.

Preferably, the first included angle α is 25 degrees, and the second included angle β is 25 degrees.

Since the first included angle α and the second included angle β range from 24 degrees to 26 degrees, the movable member 200 of the piezoelectric drive system 1000 can be moved stably and smoothly, and the piezoelectric drive device 100 can achieve a high drive efficiency.

Moreover, the first piezoelectric element 5 is symmetrical with the second piezoelectric element 6, and the first included angle α is equal to the second included angle β.

Thus, the whole structure of the piezoelectric drive device 100 is stable and has a high strength, so that the movable member 200 of the piezoelectric drive system 1000 can be driven to move smoothly and stably.

In some embodiments of the present invention, the first piezoelectric element 5 and the second piezoelectric element 6 are configured to operate in a d33 mode, so as to provide a large expanding force, such as about 500mN. Herein, the d33 mode means that a piezoelectric material has a polarization direction and a deformation direction which are the same. In other words, the polarization direction of the first piezoelectric element 5 is consistent with the deformation direction of the first piezoelectric element 5, and both directions are perpendicular to the firs side wall 41 of the recess. Similarly, the polarization direction of the second piezoelectric element 5 is consistent with the deformation direction of the second piezoelectric element 5, and both directions are perpendicular to the second side wall 42 of the recess.

Further, the first piezoelectric element 5 and the second piezoelectric element 6 operating in the d33 mode can have a high energy conversion efficiency.

Optionally, the first piezoelectric element 5 includes a plurality of stacked layers and the second piezoelectric element 6 includes a plurality of stacked layers in a direction perpendicular to paper surfaces of Figs. 3 and 4, i.e. the front-rear direction in Figs. 1 and 2. The number of the stacked layers of the first piezoelectric element 5 is equal to the number of the stacked layers of the second piezoelectric element 6. Each layer of the first piezoelectric element 5 is adhered to the first side wall 41 and the first actuating member 7, and each layer of the second piezoelectric element 6 is adhered to the second side wall 42 and the second actuating member 8. For example, the number of the stacked layers of the first piezoelectric elements 5 and the number of the stacked layers of the second piezoelectric elements 6 are 15. However, the present invention is not limited to this.

In some embodiments of the present invention, each of the first actuating member 7 and the second actuating member 8 has a first end adjacent to the holder 4 and a second end away from the holder 4. The first end of the first actuating member 7 is spaced apart from the first end of the second actuating member 8, the second end of the first actuating member 7 protrudes beyond the first piezoelectric element 5 in a direction facing away from the holder 4, and the second end of the second actuating member 8 protrudes beyond the second piezoelectric element 6 in the direction facing away from the holder 4.

For example, as shown in Figs. 1-4, the first actuating member 7 and the second actuating member 8 each have an upper end adjacent to the holder 4 and a lower end away from the holder 4. The upper end of the first actuating member 7 is spaced apart from the upper end of the second actuating member 8 by a certain distance, so that the first actuating member 7 will not interfere with the second actuating member 8 when driven to move by the first piezoelectric element 5, and vice versa. The lower end of the first actuating member 7 protrudes rightwards and downwards beyond the first piezoelectric element 5, and the lower end of the second actuating member 8 protrudes leftwards and downwards beyond the second piezoelectric element 6, so that it is convenient for the first actuating member 7 and the second actuating member 8 to be fitted with the movable member 200.

In some embodiments of the present invention, the lower end of the first actuating member 7 and the lower end of the second actuating member 8 each have a spherical-segment shape, so that the first actuating member 7 and the second actuating member 8 can have a stable contact with the movable member 200, thus ensuring the stable movement of the movable member 200.

In some embodiments of the present invention, the piezoelectric drive device 100 further includes a flexible printed circuit board 9 electrically connected to the first piezoelectric element 5 and the second piezoelectric element 6, and configured to power on or off the first piezoelectric element 5 and the second piezoelectric element 6. Further, the flexible printed circuit board 9 is arranged in the cavity 13 of the case 1 and clamped between a side wall of the case 1 and the holder 4.

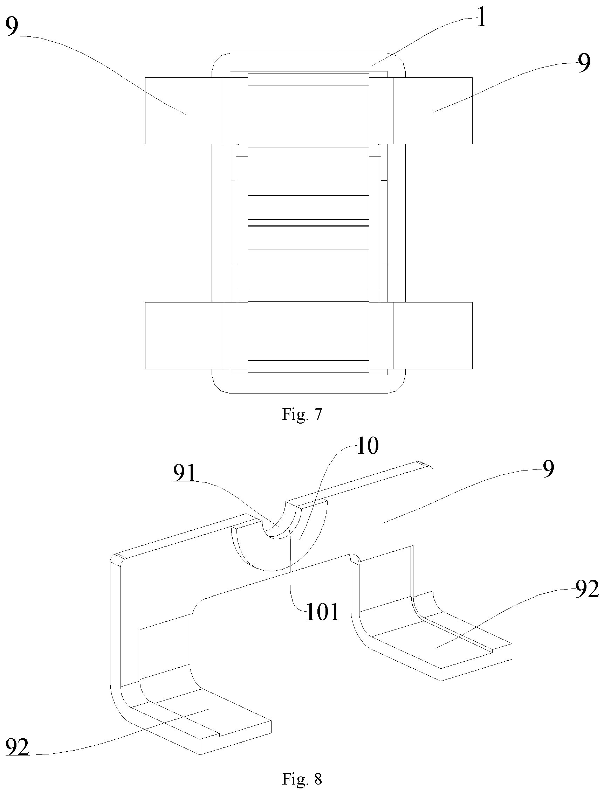

For example, as shown in Figs. 6 and 7, two flexible printed circuit boards 9 are provided, one of the two flexible printed circuit boards 9 is clamped between the front side wall of the case 1 and the holder 4, and the other one of the two flexible printed circuit boards 9 is clamped between the rear side wall of the case 1 and the holder 4. However, the present invention is not limited to this. In some other embodiments of the present invention, only one flexible printed circuit board 9 may be provided and clamped between the front or rear side wall of the case 1 and the holder 4.

When two flexible printed circuit boards 9 are provided, the two flexible printed circuit boards 9 are configured to power on or off the first piezoelectric element 5 and the second piezoelectric element 6 independently. When only one flexible printed circuit board 9 is provided, the only one flexible printed circuit board 9 is configured to power on or off the first piezoelectric element 5 and the second piezoelectric element 6 independently.

Furthermore, the flexible printed circuit board 9 has a first end received within the cavity 13 of the case 1 and a second end protrudes out of the cavity 13 of the case 1. The first end of the flexible printed circuit board 9 is flush with the first end of the holder 4, and has a first notch 91 fitted with the shaft 3. The second end of the flexible printed circuit board 9 includes two legs 92 spaced apart from each other to expose at least a part of the recess.

For example, as shown in Fig. 6 in combination with Fig. 8, an upper end of the flexible printed circuit board 9 is received within the cavity 13 of the case 1 and a lower end of the flexible printed circuit board 9 extends downwards and protrudes out of the cavity 13 of the case 1. The upper end of the flexible printed circuit board 9 is flush with the upper end of the holder 4, and the first notch 91 is aligned with the second groove 46 of the holder 4, so that the shaft 3 is fitted in the second groove 46 and the first notch 91. The lower end of the flexible printed circuit board 9 includes two legs 92 arranged on left and right side respectively, and the two legs 92 are spaced apart from each other to expose at least a part of the recess, so that the lower end of the flexible printed circuit board 9 will not interfere with the piezoelectric elements and the actuating members, and thus it is convenient for the piezoelectric elements and the actuating members to operate.

Moreover, the leg 92 of the flexible printed circuit board 9 may be bent to be horizontal after protruding out of the cavity 13 of the case 1, so as to be connected with an external power source for providing power to the first piezoelectric element 5 and the second piezoelectric element 6.

In some embodiments of the present invention, the piezoelectric drive device 100 further includes a pad 10 arranged in the cavity 13 of the case 1 and clamped between the flexible printed circuit board 9 and the side wall of the case 1.

For example, as shown in Fig. 7 in combination with Fig. 8, the pad 10 is clamped between the flexible printed circuit board 9 and the front or rear side wall of the case 1. It should be noted that one or two pads 10 may be provided, depending on the number of the flexible printed circuit board 9. That is, the pad 10 has a one to one correspondence with the flexible printed circuit board 9.

Further, the pad 10 has an end flush with the first end of the holder 4, and the end of the pad 10 has a second notch 101 fitted with the shaft 3.

For example, as shown in Fig. 8, an upper end of the pad 10 is flush with the upper end of the holder 4, and the second notch 101 is aligned with the first notch 91 and the second groove 46 of the holder 4, so that the shaft 3 is fitted in the second groove 46, the first notch 91 and the second notch 101.

In some embodiments of the present invention, each of the first actuating member 7 and the second actuating member 8 may be made of ceramic materials. The ceramic materials have a great wear resistance, so that the first actuating member 7 and the second actuating member 8 have a long service life.

In some embodiments of the present invention, the case 1 is fixed according to actual requirements. For example, the case 1 may be provided with a flange surrounding at least a part of its outer peripheral surface, and the flange is fixed to a fixed external part by a screw or a bolt.

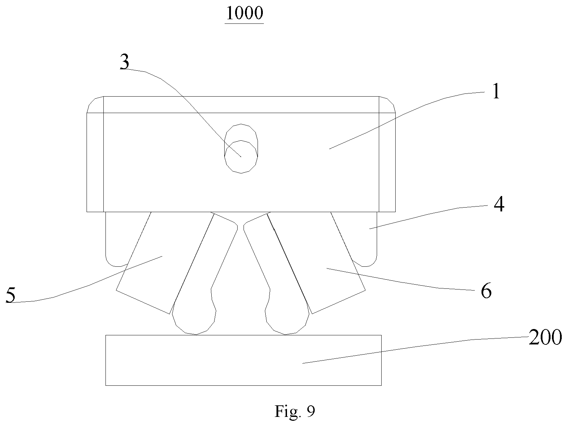

Embodiments of the present invention further provide a piezoelectric drive system 1000, as shown in Fig. 9. The piezoelectric drive system 1000 includes a piezoelectric drive device 100 according to any one of the above embodiments and a movable member 200. The movable member 200 is arranged under the piezoelectric drive device 100, and configured to be fitted with the first actuating member 7 or the second actuating member 8 of the piezoelectric drive device 100. The retaining member 2 is configured to retain the first actuating member 7 or the second actuating member 8 against the movable member 200, and the movable member 200 is configured to move under the drive of the first actuating member 7 or the second actuating member 8.

In some embodiments of the present invention, when an outer peripheral surface of the movable member 200 is flat, the first actuating member 7 and the second actuating member 8 will drive the movable member 200 to translate; when the outer peripheral surface of the movable member 200 is curved, the first actuating member 7 and the second actuating member 8 will drive the movable member 200 to rotate.

The working process of the piezoelectric drive system 1000 is briefly described below by taking the first piezoelectric element 5 as an example.

When powered on, the first piezoelectric element 5 expands along the direction perpendicular to the first side wall 41 of the recess. During the expanding process, since the left end of the first piezoelectric element 5 is restricted by the first side wall 41 of the recess, the right end of the piezoelectric element 5 expands rightwards and downwards, and then the first actuating member 7 is driven to move rightwards and downwards. The first actuating member 7 abuts against the movable member 200 and applies a driving force to the movable member 200. The driving force applied by the first actuating member 7 has a rightward component and a downward component. Thus, the movable member 200 is driven to move rightwards. For example, the movable member 200 can be driven to move 40nm precisely at one stroke.

When powered off, the first piezoelectric element 5 shrinks, thereby driving the first actuating member 7 to move leftwards and upwards. Since the direction perpendicular to the first side wall 41 of the recess has the first included angle α ranging from 24 degrees to 26 degrees with the plane where the end face of the upper end of the holder 4 is, the first actuating member 7 moving leftwards and upwards cannot apply a driving force to the movable member 200. When viewed microscopically, the first actuating member 7 moving leftwards and upwards is even separated from the movable member 200. Thus, the movable member 200 does not move together with the first actuating member 7 and still remains in its position. In this way, the piezoelectric drive system 1000 has completed a movement cycle. A periodic pulse signal may be applied to the first piezoelectric element 5, and thus the first piezoelectric element 5 can alternately complete the movements of expanding when powered on and shrinking when powered off. As the movement cycle is repeated, the movable member 200 will move rightwards continuously under the drive of the first actuating member 7.

The working process of the second piezoelectric element 5 is substantially the same with that of the first piezoelectric element 6. The difference is that a moving direction of the movable member 200 when the first piezoelectric element 5 operates is opposite to a moving direction of the movable member 200 when the second piezoelectric element 6 operates. For example, the first piezoelectric element 5 drives the movable member 200 to move rightwards, and the second piezoelectric element 6 drives the movable member 200 to move leftwards. In some other embodiments of the present invention, the first piezoelectric element 5 may drive the movable element 200 to move clockwise, and the second piezoelectric element 6 may drive the movable element 200 to move counterclockwise. Moreover, in the same time period, only one of the first piezoelectric element 5 and the second piezoelectric element 6 operates. That is, the first piezoelectric element 5 and the second piezoelectric element 6 operate in a mutually exclusive manner.

According to the above embodiments of the present invention, the piezoelectric drive system 1000 has advantages of a simple structure, a precise drive stroke, a strong drive force and a high energy conversion efficiency.

In the descriptions of the present invention, it should be noted that unless specified or limited otherwise, the terms "installed", "interconnected" and "connected" shall be broadly understood. For example, they may be fixed connections, or detachable connections or integrated connections; they may be mechanical connections or electric connections; they may also be direct connections or indirect connections through intermediate medium, and may also be inner communications of two elements. For those skilled in the art, the specific meaning of the above terms in the present invention may be understood according to specific circumstances.

## Claims

1. A piezoelectric drive device (100), comprising:
a case (1) defining a cavity (13) therein, the case (1) having a closed end and an open end;
a holder (4) arranged in the cavity (13), and having a first end coupled to the closed end of the case (1), and a second end facing towards the open end of the case (1), the second end of the holder (4) having a recess in an end face thereof, the recess comprising a first side wall (41), a second side wall (42) and a bottom (43) connected between the first side wall (41) and the second side wall (42), the first side wall (41) and the second side wall (42) obliquely extending outwards from the bottom (43);
a first piezoelectric element (5) and a second piezoelectric element (6) arranged on the first side wall (41) and the second side wall (42) of the recess, respectively, the first piezoelectric element (5) being configured to expand or shrink in a direction perpendicular to the first side wall (41) of the recess when powered on or off, the second piezoelectric element (6) being configured to expand or shrink in a direction perpendicular to the second side wall (42) of the recess when powered on or off; and
a first actuating member (7) and a second actuating member (8) fixed to the first piezoelectric element (5) and the second piezoelectric element (6), respectively, and facing towards each other,
**characterized in that**,
the piezoelectric drive device (100) further comprises:
a retaining member (2) arranged in the cavity (13), and having a first end abutting against the closed end of the case (1) and a second end opposite to the first end; and
a shaft (3) arranged in the cavity (13) and fitted with the second end of the retaining member (2), the shaft (3) being configured to move under the action of the retaining member (2),
wherein the first end of the holder (4) is fixed to the shaft (3) and abuts against the second end of the retaining member (2).

2. The piezoelectric drive device (100) according to claim 1, wherein the case (1) at least comprises two opposite side walls, each side wall has an opening (11), the openings (11) of the two opposite side walls of the case (1) are aligned with each other, two ends of the shaft (3) are received in the openings (11) of the two opposite side walls of the case (1), respectively, and the shaft (3) is configured to move within the openings (11) under the action of the retaining member (2),
preferably, end faces of the two ends of the shaft (3) are flush with outer surfaces of the two opposite side walls of the case (1), respectively,
more preferably, each opening (11) has two arc ends matching with a shape of each end of the shaft (3) and configured to be fitted with each end of the shaft (3).

3. The piezoelectric drive device (100) according to claim 1 or 2, wherein the second end of the retaining member (2) has a first groove (21), and the shaft (3) is at least partially fitted in the first groove (21),
preferably, the first end of the holder (4) has a second groove (46), and the shaft (3) is at least partially fitted in and is fixed in the second groove (46).

4. The piezoelectric drive device (100) according to claim 3, wherein the first groove (21), the shaft (3) and the second groove (46) are aligned with one another in a direction from the closed end to the open end of the case (1),
each of the first groove (21) and the second groove (46) has a cross section of an arc shape matching with the shaft (3),
the first groove (21) and the second groove (46) enclose a periphery of the shaft (3).

5. The piezoelectric drive device (100) according to any one of claims 1-4, wherein the bottom (43) of the recess comprises a first section (431), a second section (432) and a third section (433), the first section (431) is connected to the first side wall (41), the second section (432) is connected to the second side wall (42), the third section (433) is connected between the first section (431) and the second section (432),
the first section (431) is fitted with the first piezoelectric element (5), and the second section (432) is fitted with the second piezoelectric element (6),
the first piezoelectric element (5) matches with the first side wall (41) and the first section (431) of the recess in shape and orientation, respectively, and the second piezoelectric element (6) matches with the second side wall (42) and the second section (432) of the recess in shape and orientation, respectively.

6. The piezoelectric drive device (100) according to claim 5, wherein each of the first piezoelectric element (5) and the second piezoelectric element (6) has a cuboid shape, the third section (433) of the recess is parallel to an end face of the first end of the holder (4), the direction perpendicular to the first side wall (41) of the recess is orthogonal to a direction perpendicular to the first section (431) of the recess, and the direction perpendicular to the second side wall (42) of the recess is orthogonal to a direction perpendicular to the second section (432) of the recess.

7. The piezoelectric drive device (100) according to claim 5 or 6, wherein a first transition part (44) is provided at a joint of the first side wall (41) and the first section (431) of the recess, and a second transition part (45) is provided at a joint of the second side wall (42) and the second section (432) of the recess,
wherein each of the first transition part (44) and the second transition part (45) is a groove having an arc cross section.

8. The piezoelectric drive device (100) according to any one of claims 1-7, wherein the direction perpendicular to the first side wall (41) of the recess has a first included angle (α) with a plane where an end face of the first end of the holder (4) is, and the direction perpendicular to the second side wall (42) of the recess has a second included angle (β) with the plane where the end face of the first end of the holder (4) is,
preferably, the first included angle (α) ranges from 24 degrees to 25 degrees, and the second included angle (β) ranges from 24 degrees to 26 degrees.

9. The piezoelectric drive device (100) according to claim 8, wherein the first piezoelectric element (5) is symmetrical with the second piezoelectric element (6), and the first included angle (α) is equal to the second included angle (β).

10. The piezoelectric drive device (100) according to any one of claims 1-9, wherein each of the first actuating member (7) and the second actuating member (8) has a first end adjacent to the holder (4) and a second end away from the holder (4),
the first end of the first actuating member (7) is spaced apart from the first end of the second actuating member (8), the second end of the first actuating member (7) protrudes beyond the first piezoelectric element (5) in a direction facing away from the holder (4), and the second end of the second actuating member (8) protrudes beyond the second piezoelectric element (6) in the direction facing away from the holder (4).

11. The piezoelectric drive device (100) according to any one of claims 1-10, further comprising a flexible printed circuit board (9) electrically connected to the first piezoelectric element (5) and the second piezoelectric element (6), and configured to power on or off the first piezoelectric element (5) and the second piezoelectric element (6),
wherein the flexible printed circuit board (9) is arranged in the cavity (13) of the case (1) and clamped between a side wall of the case (1) and the holder (4).

12. The piezoelectric drive device (100) according to claim 11, wherein the flexible printed circuit board (9) has a first end received within the cavity (13) of the case (1) and a second end protrudes out of the cavity (13) of the case (1),
the first end of the flexible printed circuit board (9) is flush with the first end of the holder (4), and has a first notch (91) fitted with the shaft (3),
the second end of the flexible printed circuit board (9) comprises two legs (92) spaced apart from each other to expose at least a part of the recess.

13. The piezoelectric drive device (100) according to claim 11 or 12, further comprising a pad (10) arranged in the cavity (13) of the case (1) and clamped between the flexible printed circuit board (9) and the side wall of the case (1),
preferably, the pad (10) has an end flush with the first end of the holder (4), and the end of the pad (10) has a second notch (101) fitted with the shaft (3).

14. A piezoelectric drive system (1000), comprising:
a piezoelectric drive device (100) according to any one of claims 1-13; and
a movable member (200) arranged under the piezoelectric drive device (100), and configured to be fitted with the first actuating member (7) or the second actuating member (8) of the piezoelectric drive device (100),
wherein the retaining member (2) is configured to retain the first actuating member (7) or the second actuating member (8) against the movable member (200), and the movable member (200) is configured to move under the drive of the first actuating member (7) or the second actuating member (8).

## Patentansprüche

1. Piezoelektrische Antriebsvorrichtung (100), die aufweist:
ein Gehäuse (1), das in seinem Inneren einen Hohlraum (13) bildet, wobei das Gehäuse (1) ein geschlossenes Ende und ein offenes Ende aufweist;
ein in dem Hohlraum (13) angeordneter Halter (4), dessen erstes Ende mit dem geschlossenen Ende des Gehäuses (1) verbunden ist und dessen zweites Ende dem offenen Ende des Gehäuses (1) zugewandt ist, wobei das zweite Ende des Halters (4) in seiner Stirnfläche eine Aussparung aufweist, die eine erste Seitenwand (41), eine zweite Seitenwand (42) und einen zwischen der ersten Seitenwand (41) und der zweiten Seitenwand (42) verbundenen Boden (43) aufweist, wobei sich die erste Seitenwand (41) und die zweite Seitenwand (42) schräg vom Boden (43) nach außen erstrecken;
ein erstes piezoelektrisches Element (5) und ein zweites piezoelektrisches Element (6), die jeweils an der ersten Seitenwand (41) und der zweiten Seitenwand (42) der Aussparung angeordnet sind, wobei das erste piezoelektrische Element (5) so ausgebildet ist, dass es sich in einer Richtung senkrecht zur ersten Seitenwand (41) der Aussparung ausdehnt oder zusammenzieht, wenn es ein- oder ausgeschaltet wird, wobei das zweite piezoelektrische Element (6) so ausgebildet ist, dass es sich in einer Richtung senkrecht zur zweiten Seitenwand (42) der Aussparung ausdehnt oder zusammenzieht, wenn es ein- oder ausgeschaltet wird; und
ein erstes Betätigungselement (7) und ein zweites Betätigungselement (8), die jeweils am ersten piezoelektrischen Element (5) und am zweiten piezoelektrischen Element (6) befestigt sind und einander zugewandt sind,
**dadurch gekennzeichnet, dass**
die piezoelektrische Antriebsvorrichtung (100) ferner aufweist:
ein im Hohlraum (13) angeordnetes Halteelement (2), dessen erstes Ende an dem geschlossenen Ende des Gehäuses (1) anliegt und dessen zweites Ende entgegengesetzt zu dem ersten Ende ist; und
eine in dem Hohlraum (13) angeordnete Welle (3), in die das zweite Ende des Halteelements (2) eingepasst ist, wobei die Welle (3) so ausgebildet ist, dass sie sich unter der Einwirkung des Halteelements (2) bewegt,
wobei das erste Ende des Halters (4) an der Welle (3) befestigt ist und am zweiten Ende des Halteelements (2) anliegt.

2. Piezoelektrische Antriebsvorrichtung (100) nach Anspruch 1, wobei das Gehäuse (1) mindestens zwei gegenüberliegende Seitenwände aufweist, jede Seitenwand eine Öffnung (11) aufweist, die Öffnungen (11) der beiden gegenüberliegenden Seitenwände des Gehäuses (1) miteinander fluchten, zwei Enden der Welle (3) jeweils in den Öffnungen (11) der beiden gegenüberliegenden Seitenwände des Gehäuses (1) aufgenommen sind und die Welle (3) so ausgebildet ist, dass sie sich unter der Einwirkung des Halteelements (2) innerhalb der Öffnungen (11) bewegt,
wobei vorzugsweise Stirnflächen der beiden Enden der Welle (3) jeweils bündig mit den Außenflächen der beiden gegenüberliegenden Seitenwände des Gehäuses (1) sind,
noch bevorzugter weist jede Öffnung (11) zwei bogenförmige Enden auf, die einer Form jedes Ende der Welle (3) entsprechen und so ausgebildet sind, dass jedes Endes der Welle (3) in sie eingepasst ist.

3. Piezoelektrische Antriebsvorrichtung (100) nach Anspruch 1 oder 2, wobei das zweite Ende des Halteelements (2) eine erste Nut (21) aufweist und die Welle (3) zumindest teilweise in die erste Nut (21) eingepasst ist,
wobei vorzugsweise das erste Ende des Halters (4) eine zweite Nut (46) aufweist, und die Welle (3) zumindest teilweise in die zweite Nut (46) eingepasst und darin befestigt ist.

4. Piezoelektrische Antriebsvorrichtung (100) nach Anspruch 3, wobei die erste Nut (21), die Welle (3) und die zweite Nut (46) in einer Richtung vom geschlossenen Ende zum offenen Ende des Gehäuses (1) zueinander ausgerichtet sind,
wobei die erste Nut (21) und die zweite Nut (46) jeweils einen bogenförmigen Querschnitt aufweisen, der mit der Welle (3) zusammenpasst,
wobei die erste Nut (21) und die zweite Nut (46) einen Umfang der Welle (3) umschließen.

5. Piezoelektrische Antriebsvorrichtung (100) nach einem der Ansprüche 1-4, wobei der Boden (43) der Aussparung einen ersten Abschnitt (431), einen zweiten Abschnitt (432) und einen dritten Abschnitt (433) aufweist, wobei der erste Abschnitt (431) mit der ersten Seitenwand (41) verbunden ist, der zweite Abschnitt (432) mit der zweiten Seitenwand (42) verbunden ist und der dritte Abschnitt (433) zwischen dem ersten Abschnitt (431) und dem zweiten Abschnitt (432) verbunden ist,
wobei der erste Abschnitt (431) mit dem ersten piezoelektrischen Element (5) versehen ist, und der zweite Abschnitt (432) mit dem zweiten piezoelektrischen Element (6) versehen ist,
wobei das erste piezoelektrische Element (5) in Form und Ausrichtung mit der ersten Seitenwand (41) bzw. dem ersten Abschnitt (431) der Aussparung übereinstimmt, und das zweite piezoelektrische Element (6) in Form und Ausrichtung mit der zweiten Seitenwand (42) bzw. dem zweiten Abschnitt (432) der Aussparung übereinstimmt.

6. Piezoelektrische Antriebsvorrichtung (100) nach Anspruch 5, wobei das erste piezoelektrische Element (5) und das zweite piezoelektrische Element (6) jeweils eine Quaderform aufweisen, der dritte Abschnitt (433) der Aussparung parallel zu einer Stirnfläche des ersten Endes des Halters (4) verläuft, die Richtung senkrecht zur ersten Seitenwand (41) der Aussparung orthogonal zu einer Richtung senkrecht zum ersten Abschnitt (431) der Aussparung ist, und die Richtung senkrecht zur zweiten Seitenwand (42) der Aussparung orthogonal zu einer Richtung senkrecht zum zweiten Abschnitt (432) der Aussparung ist.

7. Piezoelektrische Antriebsvorrichtung (100) nach Anspruch 5 oder 6, wobei ein erstes Übergangsteil (44) an einer Verbindungsstelle der ersten Seitenwand (41) und des ersten Abschnitts (431) der Aussparung vorgesehen ist und ein zweites Übergangsteil (45) an einer Verbindungsstelle der zweiten Seitenwand (42) und des zweiten Abschnitts (432) der Aussparung vorgesehen ist,
wobei das erste Übergangsteil (44) und das zweite Übergangsteil (45) jeweils eine Nut mit bogenförmigem Querschnitt sind.

8. Piezoelektrische Antriebsvorrichtung (100) nach einem der Ansprüche 1-7, wobei die Richtung senkrecht zur ersten Seitenwand (41) der Aussparung einen ersten eingeschlossenen Winkel (α) mit einer Ebene bildet, in der sich eine Stirnfläche des ersten Endes des Halters (4) befindet, und die Richtung senkrecht zur zweiten Seitenwand (42) der Aussparung einen zweiten eingeschlossenen Winkel (β) mit der Ebene bildet, in der sich die Stirnfläche des ersten Endes des Halters (4) befindet, wobei vorzugsweise der erste eingeschlossene Winkel (α) im Bereich von 24 Grad bis 25 Grad und der zweite eingeschlossene Winkel (β) im Bereich von 24 Grad bis 26 Grad liegt.

9. Piezoelektrische Antriebsvorrichtung (100) nach Anspruch 8, wobei das erste piezoelektrische Element (5) symmetrisch zum zweiten piezoelektrischen Element (6) ist und der erste eingeschlossene Winkel (α) gleich dem zweiten eingeschlossenen Winkel (β) ist.

10. Piezoelektrische Antriebsvorrichtung (100) nach einem der Ansprüche 1-9, wobei das erste Betätigungselement (7) und das zweite Betätigungselement (8) jeweils ein erstes Ende, das an den Halter (4) angrenzt, und ein zweites Ende, das vom Halter (4) entfernt ist, aufweisen,
wobei das erste Ende des ersten Betätigungselements (7) vom ersten Ende des zweiten Betätigungselements (8) beabstandet ist, das zweite Ende des ersten Betätigungselements (7) in einer vom Halter (4) wegweisenden Richtung über das erste piezoelektrische Element (5) hinausragt, und das zweite Ende des zweiten Betätigungselements (8) in einer vom Halter (4) wegweisenden Richtung über das zweite piezoelektrische Element (6) hinausragt.

11. Piezoelektrische Antriebsvorrichtung (100) nach einem der Ansprüche 1-10, die ferner eine flexible Leiterplatte (9) aufweist, die elektrisch mit dem ersten piezoelektrischen Element (5) und dem zweiten piezoelektrischen Element (6) verbunden ist, und die so ausgebildet ist, dass sie das erste piezoelektrische Element (5) und das zweite piezoelektrische Element (6) ein- oder ausschaltet,
wobei die flexible Leiterplatte (9) im Hohlraum (13) des Gehäuses (1) angeordnet und zwischen einer Seitenwand des Gehäuses (1) und dem Halter (4) eingeklemmt ist.

12. Piezoelektrische Antriebsvorrichtung (100) nach Anspruch 11, wobei die flexible Leiterplatte (9) ein erstes Ende aufweist, das in dem Hohlraum (13) des Gehäuses (1) aufgenommen ist, und ein zweites Ende aufweist, das aus dem Hohlraum (13) des Gehäuses (1) herausragt,
wobei das erste Ende der flexiblen Leiterplatte (9) bündig mit dem ersten Ende des Halters (4) ist und eine erste Kerbe (91) aufweist, in welche die Welle (3) eingepasst ist,
wobei das zweite Ende der flexiblen Leiterplatte (9) zwei voneinander beabstandete Schenkel (92) aufweist, um zumindest einen Teil der Aussparung freizulegen.

13. Piezoelektrische Antriebsvorrichtung (100) nach Anspruch 11 oder 12, die ferner ein Pad (10) aufweist, das in dem Hohlraum (13) des Gehäuses (1) angeordnet und zwischen der flexiblen Leiterplatte (9) und der Seitenwand des Gehäuses (1) eingeklemmt ist,
wobei vorzugsweise das Pad (10) ein Ende aufweist, das bündig mit dem ersten Ende des Halters (4) ist, und das Ende des Pads (10) eine zweite Kerbe (101) aufweist, in welche die Welle (3) eingepasst ist.

14. Piezoelektrisches Antriebssystem (1000), das aufweist:
eine piezoelektrische Antriebsvorrichtung (100) nach einem der Ansprüche 1-13; und ein bewegbares Element (200), das unterhalb der piezoelektrischen Antriebsvorrichtung (100) angeordnet ist und so ausgebildet ist, dass es mit dem ersten Betätigungselement (7) oder dem zweiten Betätigungselement (8) der piezoelektrischen Antriebsvorrichtung (100) zusammenpasst,
wobei das Halteelement (2) so ausgebildet ist, dass es das erste Betätigungselement (7) oder das zweite Betätigungselement (8) gegen das bewegbare Element (200) hält, und das bewegbare Element (200) so ausgebildet ist, dass es sich unter dem Antrieb des ersten Betätigungselements (7) oder des zweiten Betätigungselements (8) bewegt.

## Revendications

1. Dispositif d'entraînement piézoélectrique (100), comprenant :
un boîtier (1) définissant une cavité (13) en son sein, le boîtier (1) comportant une extrémité fermée et une extrémité ouverte ;
un support (4) disposé dans la cavité (13) et comportant une première extrémité accouplée à l'extrémité fermée du boîtier (1) et une seconde extrémité faisant face vers l'extrémité ouverte du boîtier (1), la seconde extrémité du support (4) comportant un évidement dans sa face d'extrémité, l'évidement comprenant une première paroi latérale (41), une seconde paroi latérale (42) et un fond (43) assurant une liaison entre la première paroi latérale (41) et la seconde paroi latérale (42), la première paroi latérale (41) et la seconde paroi latérale (42) s'étendant de manière oblique vers l'extérieur à partir du fond (43) ;
un premier élément piézoélectrique (5) et un second élément piézoélectrique (6) disposés respectivement sur la première paroi latérale (41) et sur la seconde paroi latérale (42) de l'évidement, le premier élément piézoélectrique (5) étant configuré pour se dilater ou se rétracter dans une direction perpendiculaire à la première paroi latérale (41) de l'évidement lors d'une mise sous tension ou d'une mise hors tension, le second élément piézoélectrique (6) étant configuré pour se dilater ou se rétracter dans une direction perpendiculaire à la seconde paroi latérale (42) de l'évidement lors d'une mise sous tension ou d'une mise hors tension ; et
un premier élément d'actionnement (7) et un second élément d'actionnement (8) fixés respectivement au premier élément piézoélectrique (5) et au second élément piézoélectrique (6) et se faisant face,
**caractérisé en ce que**,
le dispositif d'entraînement piézoélectrique (100) comprend en outre :
un élément de retenue (2) disposé dans la cavité (13), et comportant une première extrémité en butée contre l'extrémité fermée du boîtier (1) et une seconde extrémité située à l'opposé de la première extrémité ; et
un axe (3) disposé dans la cavité (13) et logé dans la seconde extrémité de l'élément de retenue (2), l'axe (3) étant configuré pour se mouvoir sous l'action de l'élément de retenue (2),
dans lequel la première extrémité du support (4) est fixée à l'axe (3) et est en butée contre la seconde extrémité de l'élément de retenue (2).

2. Dispositif d'entraînement piézoélectrique (100) selon la revendication 1, dans lequel le boîtier (1) comprend au moins deux parois latérales opposées, chaque paroi latérale comporte une ouverture (11), les ouvertures (11) des deux parois latérales opposées du boîtier (1) sont alignées l'une avec l'autre, deux extrémités de l'axe (3) sont respectivement reçues dans les ouvertures (11) des deux parois latérales opposées du boîtier (1), et l'axe (3) est configuré pour se mouvoir à l'intérieur des ouvertures (11) sous l'action de l'élément de retenue (2),
de préférence, des faces d'extrémité des deux extrémités de l'axe (3) sont respectivement à fleur de surfaces extérieures des deux parois latérales opposées du boîtier (1),
de façon plus préférable, chaque ouverture (11) comporte deux extrémités arquées correspondant à une forme de chaque extrémité de l'axe (3) et configurées pour loger chaque extrémité de l'axe (3).

3. Dispositif d'entraînement piézoélectrique (100) selon la revendication 1 ou la revendication 2, dans lequel la seconde extrémité de l'élément de retenue (2) comporte une première gorge (21), et l'axe (3) est au moins partiellement logé dans la première gorge (21),
de préférence, la première extrémité du support (4) comporte une seconde gorge (46), et l'axe (3) est au moins partiellement logé dans la seconde gorge (46) et y est fixé.

4. Dispositif d'entraînement piézoélectrique (100) selon la revendication 3, dans lequel la première gorge (21), l'axe (3) et la seconde gorge (46) sont alignés les uns avec les autres dans un sens allant de l'extrémité fermée à l'extrémité ouverte du boîtier (1),
chacune de la première gorge (21) et de la seconde gorge (46) a une section transversale ayant une forme arquée correspondant à l'axe (3),
la première gorge (21) et la seconde gorge (46) enferment une périphérie de l'axe (3).

5. Dispositif d'entraînement piézoélectrique (100) selon l'une quelconque des revendications 1 à 4, dans lequel le fond (43) de l'évidement comprend une première section (431), une deuxième section (432) et une troisième section (433), la première section (431) est liée à la première paroi latérale (41), la deuxième section (432) est liée à la seconde paroi latérale (42), la troisième section (433) assure une liaison entre la première section (431) et la seconde section (432),
la première section (431) reçoit le premier élément piézoélectrique (5), et la deuxième section (432) reçoit le second élément piézoélectrique (6),
le premier élément piézoélectrique (5) correspond respectivement à la première paroi latérale (41) et à la première section (431) de l'évidement du point de vue de la forme et de l'orientation, et le second élément piézoélectrique (6) correspond respectivement à la seconde paroi latérale (42) et à la deuxième section (432) de l'évidement du point de vue de la forme et de l'orientation.

6. Dispositif d'entraînement piézoélectrique (100) selon la revendication 5, dans lequel chacun du premier élément piézoélectrique (5) et du second élément piézoélectrique (6) a une forme cuboïde, la troisième section (433) de l'évidement est parallèle à une face d'extrémité de la première extrémité du support (4), la direction perpendiculaire à la première paroi latérale (41) de l'évidement est orthogonale à une direction perpendiculaire à la première section (431) de l'évidement, et la direction perpendiculaire à la seconde paroi latérale (42) de l'évidement est orthogonale à une direction perpendiculaire à la deuxième section (432) de l'évidement.

7. Dispositif d'entraînement piézoélectrique (100) selon la revendication 5 ou la revendication 6, dans lequel une première partie de transition (44) est prévue au niveau d'une jonction entre la première paroi latérale (41) et la première section (431) de l'évidement, et une seconde partie de transition (45) est prévue au niveau d'une jonction entre la seconde paroi latérale (42) et la deuxième section (432) de l'évidement,
dans lequel chacune de la première partie de transition (44) et de la seconde partie de transition (45) est une gorge ayant une section transversale arquée.

8. Dispositif d'entraînement piézoélectrique (100) selon l'une quelconque des revendications 1 à 7, dans lequel la direction perpendiculaire à la première paroi latérale (41) de l'évidement affiche un premier angle inclus (α) avec un plan au niveau duquel se trouve une face d'extrémité de la première extrémité du support (4), et la direction perpendiculaire à la seconde paroi latérale (42) de l'évidement affiche un second angle inclus (β) avec le plan au niveau duquel se trouve la face d'extrémité de la première extrémité du support (4),
de préférence, le premier angle inclus (α) s'inscrit dans une plage de 24 degrés à 25 degrés, et le second angle inclus (β) s'inscrit dans une plage de 24 degrés à 26 degrés.

9. Dispositif d'entraînement piézoélectrique (100) selon la revendication 8, dans lequel le premier élément piézoélectrique (5) est symétrique au second élément piézoélectrique (6), et le premier angle inclus (α) est égal au second angle inclus (β).

10. Dispositif d'entraînement piézoélectrique (100) selon l'une quelconque des revendications 1 à 9, dans lequel chacun du premier élément d'actionnement (7) et du second élément d'actionnement (8) comporte une première extrémité adjacente au support (4) et une seconde extrémité située à l'opposé du support (4),
la première extrémité du premier élément d'actionnement (7) est espacée de la première extrémité du second élément d'actionnement (8), la seconde extrémité du premier élément d'actionnement (7) fait saillie au-delà du premier élément piézoélectrique (5) dans un sens faisant face à l'opposé du support (4), et la seconde extrémité du second élément d'actionnement (8) fait saillie au-delà du second élément piézoélectrique (6) dans un sens faisant face à l'opposé du support (4).

11. Dispositif d'entraînement piézoélectrique (100) selon l'une quelconque des revendications 1 à 10, comprenant en outre une carte à circuits imprimés flexible (9) connectée électriquement au premier élément piézoélectrique (5) et au second élément piézoélectrique (6), et configurée pour mettre sous tension ou hors tension le premier élément piézoélectrique (5) et le second élément piézoélectrique (6),
dans lequel la carte à circuits imprimés flexible (9) est disposée dans la cavité (13) du boîtier (1) et est serrée entre une paroi latérale du boîtier (1) et le support (4).

12. Dispositif d'entraînement piézoélectrique (100) selon la revendication 11, dans lequel la carte à circuits imprimés flexible (9) comporte une première extrémité reçue à l'intérieur de la cavité (13) du boîtier (1) et une seconde extrémité qui fait saillie hors de la cavité (13) du boîtier (1),
la première extrémité de la carte à circuits imprimés flexible (9) est à fleur de la première extrémité du support (4), et comporte une première encoche (91) logeant l'axe (3),
la seconde extrémité de la carte à circuits imprimés flexible (9) comprend deux pattes (92) espacées l'une de l'autre de façon à exposer au moins une partie de l'évidement.

13. Dispositif d'entraînement piézoélectrique (100) selon la revendication 11 ou la revendication 12, comprenant en outre une pastille (10) disposée dans la cavité (13) du boîtier (1) et serrée entre la carte à circuits imprimés flexible (9) et la paroi latérale du boîtier (1),
de préférence, la pastille (10) comporte une extrémité à fleur de la première extrémité du support (4), et l'extrémité de la pastille (10) comporte une seconde encoche (101) logeant l'axe (3).

14. Système d'entraînement piézoélectrique (1000), comprenant :
un dispositif d'entraînement piézoélectrique (100) selon l'une quelconque des revendications 1 à 13 ; et
un élément mobile (200) disposé sous le dispositif d'entraînement piézoélectrique (100), et configuré pour être ajusté avec le premier élément d'actionnement (7) ou avec le second élément d'actionnement (8) du dispositif d'entraînement piézoélectrique (100),
dans lequel l'élément de retenue (2) est configuré pour retenir le premier élément d'actionnement (7) ou le second élément d'actionnement (8) contre l'élément mobile (200), et l'élément mobile (200) est configuré pour se mouvoir sous l'entraînement du premier élément d'actionnement (7) ou du second élément d'actionnement (8).
